# EUROPEAN PATENT APPLICATION

(11) **EP 2 743 231 A1**
(43) Date of publication of application: **18.06.2014**
(21) Application number: 11864192.7
(22) Date of filing: 15.11.2011
(51) Int. Cl.: C01B 31/02, B82Y 30/00

(54) **METHOD FOR PRODUCING CARBON NANOTUBES IN THE ABSENCE OF METAL CATALYSTS**

(30) Priority: 26.04.2011 ES 201130655
(71) Applicant: Universidad De Córdoba, 14071 Córdoba (ES)
(72) Inventor: CALZADA CANALEJO, María Dolores, E-14071 Córdoba (ES); JIMÉNEZ BOLÍVAR, Margarita, E-14071 Córdoba (ES)
(74) Representative: Temino Ceniceros, Ignacio
(86) International application number: PCT/ES2011/070783
(87) International publication number: WO 2012/146796

(57) **Abstract**

The invention relates to a method for producing carbon nanotubes in the absence of metal catalysts which, starting with a carbon source, is characterised by comprising the steps of: generating the plasma at atmospheric pressure using gases in which said generation takes place in a container coupled with the energy generator which supplies the power required to create the plasma; mixing the carbon-containing substance with a carrier gas; injecting the mix of the carbon source and the carrier gas into the container where the plasma is created; and forming the nanocarbon material on a substrate at the plasma outlet.

## Description

The present invention relates to a method for producing carbon nanotubes using a plasma at atmospheric pressure without the intervention of metal catalysts during the process. The invention falls within the field of the production of nanostructures and more specifically in the corresponding to the carbon nanotubes.

### State of the art of the invention

The study of nanocarbon materials has attracted considerable attention in recent years, based on the extraordinary physical and chemical properties that these materials possess. These include electrical and mechanical properties which, combined with its low density, make that these materials have many applications in the areas of electronics, catalysis, energy storage, and composite materials.

The interest in this type of materials increases significantly as a result of the discovery of new allotropic forms of solid crystalline carbon additional to those traditionally known of graphite and diamond. These new forms of nanocarbon material are those called fullerenes and the carbon nanotubes (carbon nanotubes, CNTs), discovered by Kroto *et al.* in 1985 (H. W. Kroto, J.R. Heath, S.C. O'Brien, R.F. Curl and R.E. Smalley, Nature 318 (1985),162) and Iijima in 1991 (S. Iijima, Nature 354 (1991) 56), respectively. But today, the awarding of the Nobel Prize in Physics 2010 to the researchers A. Geim and K. Novoselov, by the synthesis of sheets of graphene from graphite used in the manufacture of pencils, it has increased the interest not only in graphene, also in the case of the carbon nanotubes, which, from a structural point of view, can be described as graphene layers rolled up to form either single-walled (SWNT) or multi-walled (MWNT) hollow cylinders. The inner diameter of the SWNTs ranges between 0.4 and 2.4 nm, and the length from a few microns to several millimeters. The MWNTs are considered as concentric SWNTs, with increasing diameter and coaxially arranged, being the number of layers between 2 and 50, in such a way that the outer diameter of these materials can reach 10 nm and the distance between layers 0.34 nm.

Depending on its structure, the carbon nanotubes can be considered conductive, semiconductive or non-conductive. At the same time, they have a high hardness as well as a great elasticity and ability to bend and deform, recovering its volume and its initial shape. All this makes that nanotubes could be used as components of fibers with high hardness, low weight and high electrical conductivity. In addition, due to its high length/diameter ratio and stability, both chemical and mechanic, the carbon nanotubes are promising candidates as excellent electric emitters of field for use in flat screens; and could also be combined with a wide variety of chemical groups, which greatly extends their applications in the areas of conductive coatings, electric cells, nanosensors, biotechnology or catalysis.

The carbon nanotubes can be synthesized using different techniques, highlighting:
a) *Electric-arc discharge:* This was the first method used to produce carbon nanotubes and consists of setting an arc of electrical discharge between two carbon electrodes in an inert atmosphere. Electrodes can be made of pure graphite, used as a carbon source, or graphite mixed with a metal (Co, Ni, Fe) that is co-evaporated together with the carbon and acts as a catalyst of formation of nanotubes.
b) *Laser ablation.* The carbon source, in this case, are graphite disks, so that this is evaporated by the action of a pulsed laser in a stream of *He* or *Ar.* Similarly to the previous technique, the graphite can be pure or mixed with a metal that acts as a catalyst for the formation of nanotubes.
c) *Catalytic decomposition of hydrocarbons and CO:* Basically, this technique is characterized by using catalytic solid-gas fluidized bed reactors, the process being called Chemical Vapor Deposition (CVD) or Catalytic Chemical Vapor Deposition (CCVD). In this technique, the catalysts are of type metal/carrier, being the most used metals Fe, Co, Ni and their alloys, and in terms of the most common carriers SiO₂, Al₂O₃, MgO, and TiO₂. The precursor decomposes at operating temperature (around 1000 - 1100 °C), generating metal nanoparticles that catalyze the decomposition of hydrocarbon and CO used and present in the gas stream, generating the carbon nanotubes.

Through the first two techniques, arc discharge and laser ablation, mixtures of SWNTs, MWNTs, carbon nanofibers, other amorphous materials that are not desirable and metal particles of the catalyst used, are obtained, providing a high degree of impurity to the synthesized nanotubes. Furthermore, they are expensive and difficult to scale processes, being difficult to control industrially the selectivity towards the desired material (SWNTs or MWNTs).

As indicated above, in the State of the art the decomposition of hydrocarbons and CO by CVD is considered as the most appropriate, since it is easy to scale and cheaper, since it is carried out at temperatures lower than of the other two techniques, which leads to a lower energy consumption.

Faced with the techniques described above, and for only a decade, the use of plasmas at atmospheric pressure is investigating as a reactive medium for decomposition of carbon sources such as ethanol, carbon monoxide (CO) and methane, by incorporating metal catalysts in some of the steps of the synthesis process of said nanocarbon material.

In this respect, it should be mentioned the works by Zají 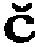 ková *et al. (Atmospheric pressure microwave torch for synthesis of carbon nanotubes,* Plasma Phys. Control. Fusion 47 (2005) B655-B666), Ja 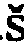 ek *et al. (Carbon nanotubes synthesis in microwave plasma torch at atmospheric pressure,* Material Sci. Engin. C 26 (2006) 1189-1193), Zají 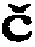 ková *et al.* (Characterization of carbon nanotubes deposited in microwave torch at atmospheric pressure, Plasma Process. Polym. 4 (2007) 5245-5249), Ja 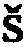 ek *et al.* (Discussion of important factors in deposition of carbon nanotubes by atmospheric pressure microwave plasma torch, Phys. Chem. Solids 68 (2007) 738-743). These researchers use a microwave torch, at atmospheric pressure, for the synthesis of carbon nanotubes on silicon substrates (Silicon Wafers) with catalytic iron films without external heating of the substrate. The carbon source used was methane which was added to the *Ar* used as plasmogenic gas as well as a small concentration of *H₂* used to cause the expansion of the microwave torch at the nozzle outlet. Due to the spatial non-uniformity of the discharge and the relative small diameter of the torch with respect to the dimensions of the substrate, in this, there are regions with different concentration of carbon nanotubes, and the presence in them of nanoparticles of *Fe* (catalyst).

In Chen et al. (Plasma torch production of macroscopic carbon nanotube structures, Carbon 41 (2003) 2555-2560), a plasma torch at low power atmospheric pressure (<1000 W) was used, to yield 25 mg/hr of carbon nanotubes. The plasmogenic gas consisted of a mixture of three gases: argon, pure CO, and CO/iron carbonyl. Argon was used only for the ignition of plasma and was withdrawn at the same time when the flow of pure CO was increased. The injection of the CO/iron carbonyl mixture aimed that the latter acted as a catalyst for the growth of nanotubes inside a quartz tube through which said mixture passed.

Nozaki et al. (Carbon nanotubes deposition in glow barrier discharge enhanced catalytic CVD, J. Phys. D: Appl. Phys. 35 (2002) 2779-2784) study the production of carbon nanotubes, by a 'dielectric barrier discharge' (DBD) and a 'atmospheric pressure glow discharge' (APG). In both cases, these discharges were assisted by CVD and the plasmogenic gas consisted of a mixture of gases He/H₂/CH₄. The growth of nanotubes took place on quartz substrates with a 20 nm Ni layer. The results showed that in the case of the APG, the structure of the nanotubes depends on the geometry of the catalyst (Ni). However, for the DBD used, there was no growth of nanocarbon material.

Kikuchi et al. (Rf microplasma jet at atmospheric pressure: characterization and application to thin film processing, J. Phys. D: Appl. Phys. 37 (2004) 1537-1543) developed a microplasma jet of Ar at atmospheric pressure generated by two electrodes, using pure methane as plasmogenic gas. The nanotubes were synthesized on silicon substrates (wafers) previously oxidized with a stream of O₂/He and with aluminium (Al) deposited by the evaporation of metal from one of the electrodes. In their analysis, they deduced that the structure of the nanotubes depended on the temperature of the substrate, the flow rate of methane and the type of metal deposited on the substrate.

Finally, Hahn et al. (Catalyst free synthesis of high-purity carbon nanotubes by thermal plasma jet, Carbon 42 (2005) 2638-2641) synthesized carbon nanotubes using a plasma jet without incorporating metal catalysts, but in this case the plasma is generated in a reactor under reduced pressure and not at atmospheric pressure, and nanotubes are only generated at the point of contact between the plasma and substrate, being essential that the gas used as plasmogenic gas contains a certain proportion of H₂.

Several patents which describe methods for the synthesis of carbon nanotubes using a plasma as a gas carrier containing carbon, can also be found, but in all of them there is a previous deposition of metal catalysts on the substrates on which the growth of the carbon nanotubes takes place: US 20010209704 (Yuichi et al., August 19, 2010), US 2009214800 (Kimitsugu, August 27, 2009), US 2010075060 (Pravin et al. March 25, 2010), and US 2008226536 (Smiljanic, September 18, 2008).

This invention presents a technique based on the use of a plasma at atmospheric pressure for the synthesis of carbon nanotubes by the decomposition of carbon-containing substances without the complementarity of any other chemical process and confluence of any metal catalyst so that said synthesis takes place. It is therefore an alternative technique to the use of laser ablation, arc discharge and CVD as well as those in which a plasma is used in combination with metal catalysts or a plasma under reduced pressure.

With this invention, the cost of production of carbon nanotubes is cheaper since there is no need of using vacuum systems and catalysts as well as subsequent purification processes of the metal-containing nanotubes.

### Description of the invention

A plasma is a medium in which electrons, ions and atoms coexist with enough energy to break, through collisions, the bonds of the molecules of the substances injected into the same. In plasmas at atmospheric pressure, the energy of the electrons could be ³7000 K and that of the heavy particles ³1200 K being higher than the 500 K required for the decomposition of organic compounds in their elements. On the other hand, this difference in temperature between the plasma particles is characteristic of plasmas out of the Local Thermodynamic Equilibrium (LTE), what allows varying the density and temperature of their species by varying the operating conditions of the discharge (power applied, type and gas flow), thus being able to modify the reactions that take place in the discharge in the desired direction.

The present invention relates to a process for synthesis of carbon nanotubes using a microwave plasma at atmospheric pressure without using metal catalysts during the process. In accordance with the invention, a carbon source is decomposed within the plasma, giving rise to the precursor species (C₂ and C) of the nanotubes which are subsequently formed at the plasma outlet.

More specifically, the method of the invention is characterized in that it comprises the steps of:
(i) generating the plasma at atmospheric pressure using gases in which said generation takes place in a container coupled with the energy generator which supplies the power required to create the plasma;
(ii) mixing the carbon-containing substance with a carrier gas;
(iii) injecting the mix of the carbon source and the carrier gas into the container where the plasma is created; and
(iv) forming the nanocarbon material on a substrate at the plasma outlet.

Throughout the description and claims, the word "comprises" and its variations are not intended to exclude other technical features, additives, components or steps. For those skilled in the art, other objects, advantages and characteristics of the invention will emerge in part from the description and in part from the practice of the invention. The following examples and drawings are provided by way of illustration, and are not intended to be limiting of the present invention. Furthermore, the present invention covers all the possible combinations of particular and preferred embodiments herein indicated.

### Brief description of the drawings

A series of drawings will be briefly described below for a better understanding of the invention and expressly relating to an embodiment of said invention presented as a non-limiting example thereof.
Fig. 1 shows a schematic illustration of the steps of the process employed in the exemplary embodiment of the invention.
Fig. 2 shows an image by TEM (transmission electron microscopy) of carbon nanotubes obtained by means of the technique object of the present invention in the exemplary embodiment.
Fig. 3 shows a 'Raman spectrum' of the product obtained in the exemplary embodiment, characteristic of carbon nanotubes.

### Explanation of a detailed embodiment of the invention and example of use

As shown in the accompanying figures, a method for producing carbon nanotubes in the absence of metal catalysts is presented using a carbon source which comprises one of the following substances: methane, ethane, propane, ethylene, acetylene, methanol, ethanol, CO, CO₂, toluene, benzene, and/or their respective mixtures. The method comprises the following steps:
(i) generation of the plasma at atmospheric pressure using gases comprising helium, neon, argon and N₂, and/or their mixtures. The generation takes place in a container coupled with the energy generator which supplies the power required to create the plasma;
(ii) Mix of the carbon-containing substance, upon vaporization if necessary, with a carrier gas including helium, neon, argon and N₂, and/or their mixtures;
(iii) Injection of the mix (carbon source and carrier gas) into the container where the plasma is created.
(iv) Formation of the nanocarbon material on a substrate at the plasma outlet. This substrate of quartz material does not need to be treated previously or submitted to a heating during the synthesis process. The nanocarbon material consists of one or more products as single-walled nanotubes, multi-walled nanotubes and amorphous carbon.

Any metal catalyst is used during the steps of which consists of the process, as a result, the carbon nanotubes do not contain metal particles and the process of purification for the removal of these particles is not necessary.

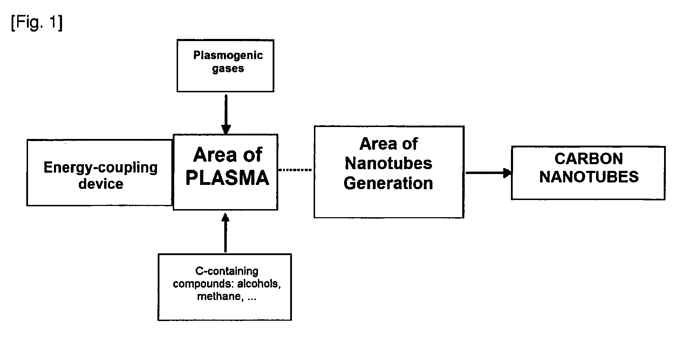

Based on this non-limitative practical embodiment, ethanol was used as a carbon source and gas argon for plasma distillation and generation. As shown in Fig. 1, the process comprises the following steps:
- Process of vaporization of the carbon source and its distillation to the plasma inlet.
- Plasma generation.
- Synthesis of carbon nanotubes on a substrate at the plasma outlet.

### 1) Process of vaporization of the carbon source and its distillation to the plasma inlet

The purpose of this system is to produce the vaporization of alcohol (i.e., the carbon source) and mix it with a carrier gas (argon) in order to delivery it to the plasma inlet. Although in principle, small concentrations of liquid in the carrier gas could reach by bubbling a gas stream in the liquid to be evaporated, in order to make reproducible this method, the control of the amount of alcohol and the temperature at which the vaporization of alcohol is carried out, is required.

In this non-limitative practical embodiment, 0.22 g/h ethanol as a carbon source was used, that was vaporized and distillated with gas argon to the plasma inlet. Argon gas had a purity of 99.999% and the flow used of 750 ml/min. Vaporization of alcohol, and its mixture with the carrier gas, was carried out using a CEM (Controlled Evaporator Mixer) and consisted of the following elements:
- Liquid pressurization system.
- Coriolis liquid mass flow meter.
- Thermal gas mass flow meter/controller.
- Controlled mixer-evaporator which consists of, in turn, a three-way mixing valve and an evaporating oven.

The ethanol-argon mixture in gas phase was conducted by means of a stainless steel tube to the plasma inlet. This tube was heated using a heating cable and an electronic temperature controller by which the temperature was visualized and regulated so that the gas mixture was kept at a temperature above the boiling point of the alcohol.

### 2) Plasma generation

In the non-limitative practical embodiment, a plasma generated by an electromagnetic-energy coupler called surfatron was used, operating in continuous mode at a frequency of 2.45 GHz and a power of 200 W. The discharge was generated using high-purity argon (99.999%), as plasmogenic gas, inside of a dielectric tube, passing through the electromagnetic-energy coupling device (surfatron), which in this practical embodiment it was of quartz. The dimensions of the tube were 1.5 and 4 mm of inner and outer diameter, respectively. The entry of ethanol-argon mixture to plasma was performed by one of its ends, leaving the other end open to the atmosphere, so the plasma was created at atmospheric pressure. Quartz tube length was 10 cm and plasma occupied an average length of 2.3 cm, both lengths measured from the surfatron device. Given the high temperatures reached in the plasma, it was made necessary the external cooling of the quartz tube in order to prevent the deterioration or the possible fusion of the same. Said cooling, in the non-limitative practical example set out here, was performed by an airflow at room temperature from a compressed air tank. All these working conditions are reflected in the following table:

**[Table 1]**

| Coupler Device | Surfatron |
|---|---|
| Working frequency | 2.45 GHz |
| Microwave power | 200 W |
| Plasmogenic Gas | Argon |
| Carrier gas of ethanol | Argon |
| Total argon flow | 750 ml/min |
| Ethanol flow | 0.22 g/h |
| Refrigeration | Compressed air |
| Inner diameter of quartz tube | 1.5 mm |
| Outer diameter of quartz tube | 4 mm |
| Length of quartz tube | 10 cm |

### 3) Synthesis of carbon nanotubes on a substrate at the plasma outlet.

The molecules of alcohol injected into the plasma were decomposed by collisions with the plasmogenic gas particles (electrons, ions and neutrons) giving rise to the C and C₂ species, precursor species for the formation of the characteristic structure of the carbon nanotubes.

These C and C2 species generated in the plasma were distillated to the discharge outlet, giving rise to the formation of carbon nanotubes on quartz tube area not occupied by the plasma; area that did not have to be treated prior to the creation of plasma or heated by an external heat source during the growth process of the carbon nanotubes.

In addition, nanocarbon material that was not fixed to the walls of the tube and that was distillated toward the quartz tube outlet by the gas argon flow used as plasmogenic gas also was collected.

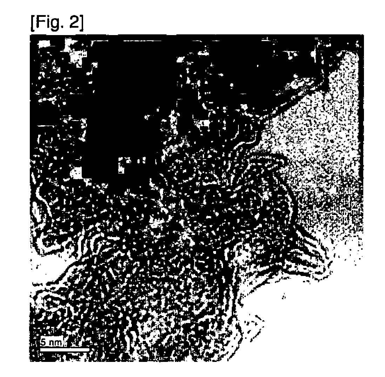

Fig. 2 shows an image obtained by transmission electron microscopy (TEM) of the material synthesized in the described example of the invention, noting the typical structure of single-walled carbon nanotubes.

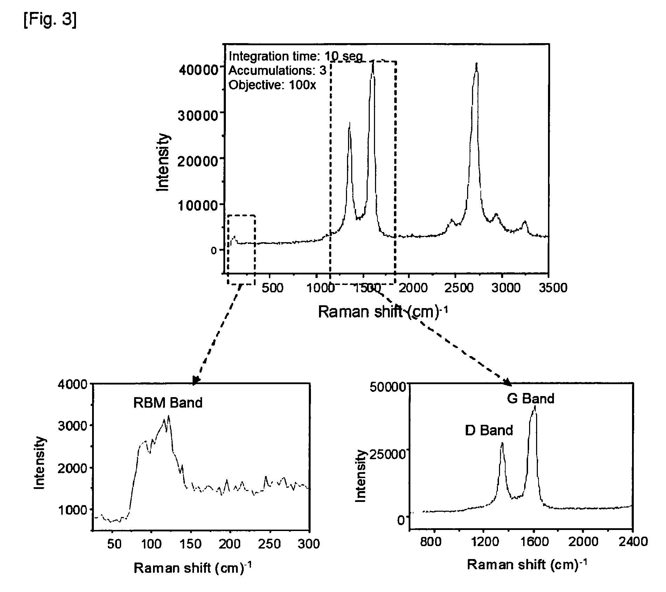

Fig. 3 shows the Raman spectrum corresponding to the samples of the Fig. 2. This spectrum was taken at room temperature using a Confocal Raman and Atomic Force Microscope alpha 500 device from WITEC, equipped with a 532-nm Nd:YAG laser of 55 mW of power as an excitation source. In the Raman spectrum, shown in Fig. 3, is observed:
a) the signal of the RBM band (100-300 cm⁻¹) that is characteristic of single-walled nanotubes, showing the presence of this type of nanotubes in the sample;
b) the G band (1590 cm⁻¹) characteristic of carbon ordered depending on configuration sp², and
c) the D band (1350 cm⁻¹) which refers to amorphous carbon with structure sp³. The ratio of intensities I_{Q}/I_{D} of the G and D bands, respectively, provides information about the proportion of synthesized carbon nanotubes to amorphous carbon generated, and it is considered a quality index of said nanotubes. Values of I_{G}/I_{D} greater than the unit indicate a high quality of the synthesized material (carbon nanotubes). In the example of the invention, this ratio is 1.6 indicating the good quality of the single-walled nanotubes synthesized by this method.

## Claims

1. Method for producing carbon nanotubes in the absence of metal catalysts which, starting with a carbon source, is **characterized by** comprising the steps of:
(i) generating the plasma at atmospheric pressure using gases in which said generation takes place in a container coupled with the energy generator which supplies the power required to create the plasma;
(ii) mixing the carbon-containing substance with a carrier gas;
(iii) injecting the mix of the carbon source and the carrier gas into the container where the plasma is created; and
(iv) forming the nanocarbon material on a substrate at the plasma outlet.

2. Method according to claim 1, wherein the carbon source is selected from methane, ethane, propane, ethylene, acetylene, methanol, ethanol, CO, CO₂, toluene, benzene and combinations of the above, and biogas.

3. Method according to the preceding claims, wherein the generation of the plasma at atmospheric pressure uses a gas selected from helium, neon, argon, N₂, and combinations of these.

4. Method according to the preceding claims, wherein the synthesized carbon nanotubes are single-walled (SWNT) or multi-walled (MWNT) nanotubes, depending on the operating conditions under which the method is implemented.

5. Method according to the preceding claims, wherein prior to the mixing, a vaporization of the carbon-containing substance is carried out.
